# EUROPEAN PATENT APPLICATION

(11) **EP 4 738 473 A1**
(43) Date of publication of application: **06.05.2026**
(21) Application number: 25197548.8
(22) Date of filing: 22.08.2025
(51) Int. Cl.: H01M 4/62, H01B 1/06, H01M 10/0525, H01M 10/0562, H01M 50/431, H01M 50/497, C01D 15/00

(54) **SULFIDE SOLID ELECTROLYTE, METHOD OF PREPARING THE SAME AND APPLICATION**

(30) Priority: 31.10.2024 CN 202411545096
(71) Applicant: AESC Japan Ltd., Yokohama-Shi, Kanagawa 220-0012 (JP)
(72) Inventor: YU, Le, Pudong New Area Shanghai, Shanghai 201315 (CN); WU, Ming, Pudong New Area Shanghai, Shanghai 201315 (CN)
(74) Representative: Becker, Eberhard

(57) **Abstract**

A sulfide solid electrolyte, a method of preparing the same, and an application are provided. A molecular formula of the sulfide solid electrolyte is Li_{f}P_{1-g}E_{g}S_{w}O_{g}Q_{z}, where, 5<f<10, 0<g<1, 3<w<6, 4<w+g<6, 0<z<2, E is selected from one or more of Mg, Ca, Sr, Ba, Zn, Cr, Sn, or Pb, and Q is selected from one or more of Cl, Br, or I. Through the sulfide solid electrolyte, the method of preparing the same, and the application provided by the disclosure, the stability of ionic conductivity of the sulfide solid electrolyte is increased, the air stability is enhanced, and the electrolyte/active material interface properties are improved, so that the service life and safety of an all-solid-state lithium-ion battery are increased.

## Description

### BACKGROUND

### Technical Field

The disclosure relates to the technical field of lithium-ion batteries, and specifically relates to a sulfide solid electrolyte, a method of preparing the same, and an application.

### Description of Related Art

Lithium-ion batteries, as the mainstream secondary batteries at present, is widely used in electric vehicles, electronic products, and other fields. However, conventionally, a lithium-ion battery adopts flammable organic liquid electrolyte, which may pose safety hazards such as electrolyte leakage and flammability, so further development of lithium-ion batteries is limited. In order to overcome the safety problems found in the organic liquid electrolyte, solid electrolyte has become a key research direction for next-generation battery technology.

At present, most of the currently-available sulfide electrolytes exhibit poor chemical stability. Further, sulfides are prone to side reactions with electrode materials, so irreversible capacity loss may be generated, and the cycle performance of the battery is thereby seriously affected. In addition, sulfides are also prone to react with components in air such as water and oxygen, leading to deterioration of electrolyte performance, etc. These problems seriously limit the promotion of sulfide solid electrolyte in practical applications.

### SUMMARY

The disclosure provides a sulfide solid electrolyte, a method of preparing the same, and an application through which stability of ionic conductivity of the sulfide solid electrolyte is increased, air stability is enhanced, and electrolyte/active material interface properties are improved, so that the service life and safety of an all-solid-state lithium-ion battery are increased.

To address the above technical problems, the disclosure provides a sulfide solid electrolyte having a molecular formula of Li_{f}P_{1-g}E_{g}S_{w}O_{g}Q_{z}, where, 5<f<10, 0<g<1, 3<w<6, 4<w+g<6, 0<z<2, E is selected from one or more of Mg, Ca, Sr, Ba, Zn, Cr, Sn, or Pb, and Q is selected from one or more of Cl, Br, or I.

In an embodiment of the disclosure, E is selected from Mg, and Q is selected from Cl.

In an embodiment of the disclosure, a value range of g is 0.01<g<0.1.

The disclosure further provides a method of preparing the sulfide solid electrolyte, and the method includes the following steps.

According to a chemical formula of the sulfide solid electrolyte, a Li source, a P source, an E source, a S source, and a Q source are mixed according to a stoichiometric ratio, and the mixture is placed in a ball mill jar for ball milling to obtain sulfide solid electrolyte precursor powder.

The sulfide solid electrolyte precursor powder is calcined at a predetermined temperature to obtain the sulfide solid electrolyte.

In an embodiment of the disclosure, the Li source is selected from one or more of LiCl, LiBr, LiI, or Li₂S, the P source is selected from one or more of elemental P, P₂S₅, P₄S₆, PCl₅, or PBr₅, the E source is selected from one or more of oxide of E or sulfide of E, the S source is selected from one or more of elemental S, Li₂S, P₂S₅, P₄S₆, MgS, CaS, SrS, BaS, ZnS, CrS, SnS, or PbS, and the Q source is selected from one or more of LiCl, PCl₅, LiBr, PBr₅, LiI, or I₂. The O element in the chemical formula is derived from the oxide of E.

In an embodiment of the disclosure, ball milling time is 1h to 48h, a ball milling rotation speed is 50 rpm to 1,500 rpm, and a ball-to-material ratio is 1:1 to 100:1.

In an embodiment of the disclosure, the predetermined temperature is 400°C to 600°C, and time of the calcining treatment is 1h to 18h.

The disclosure further provides an all-solid-state lithium-ion battery at least including a positive electrode sheet, a negative electrode sheet, and a solid electrolyte membrane.

The positive electrode sheet includes a halide solid electrolyte including Li_{2.35}Zr_{0.65}Fe_{0.35}Cl₅Br_{0.5}I_{0.5}.

The solid electrolyte membrane is disposed between the adjacent positive electrode sheet and negative electrode sheet. The solid electrolyte membrane includes the sulfide solid electrolyte according to the above.

In an embodiment of the disclosure, the positive electrode sheet includes a positive active material selected from one or more of lithium nickel cobalt manganese oxide, lithium nickel oxide, lithium manganese oxide, lithium nickel manganese oxide, lithium cobalt oxide, or lithium nickel cobalt aluminum oxide.

The disclosure further provides an electronic apparatus including the all-solid-state lithium-ion battery according to the above.

To sum up, the disclosure provides a sulfide solid electrolyte, the method of preparing the same, and the application. By introducing the E element, the O element, and the Q element into the sulfide solid electrolyte, the air stability of the sulfide solid electrolyte is effectively improved, the H₂S gas generated by atmospheric degradation is reduced, and the air stability and chemical stability of the sulfide solid electrolyte are enhanced. A special dielectric layer is formed at the electrolyte/lithium metal negative interface, so that the ionic conductivity of the sulfide solid electrolyte is ensured, lithium ions move rapidly, and the electric field is uniformly distributed. The nucleation and growth of lithium are controlled, and lithium dendrites are prevented from being formed, so the stability and performance of the lithium-ion battery are significantly improved, and the service life and safety of the all-solid-state lithium-ion battery and lithium battery are enhanced. The stability of conductivity of the sulfide solid electrolyte is increased, the air stability is enhanced, and the electrolyte/active material interface properties are improved, so that the compatibility with active materials is raised.

### BRIEF DESCRIPTION OF THE DRAWINGS

To make the technical solutions provided in the embodiments of the disclosure more clearly illustrated, several accompanying drawings required by the embodiments for description are briefly introduced as follows. Obviously, the drawings in the following description are merely some embodiments of the disclosure, and for a person having ordinary skill in the art, other drawings can be obtained based on these drawings without inventive effort.
FIG. 1 is a performance graph of an all-solid-state lithium-ion battery in Example 3 subjected to a 1C/1C long cycle at room temperature.
FIG. 2 is a scanning electron microscope (SEM) image of a sulfide solid electrolyte in Example 3.

### DESCRIPTION OF THE EMBODIMENTS

The implementation of the disclosure is illustrated below by specific embodiments. A person having ordinary skill in the art can easily understand other advantages and effects of the disclosure from the content disclosed in this specification. The disclosure can also be implemented or applied through other different specific implementation ways. The details in this specification can also be modified or changed based on different viewpoints and applications without departing from the spirit of the disclosure.

It should be understood that the disclosure can be implemented in different forms and should not be interpreted as limited to the embodiments presented herein. On the contrary, providing these embodiments will make the disclosure thorough and complete and will fully convey the scope of the disclosure to a person having ordinary skill in the art.

The technical solution of the disclosure is further detailed in combination with the embodiments in the following paragraphs. Obviously, the described embodiments are only part of the embodiments of the disclosure, not all embodiments. Based on the embodiments of the disclosure, all other embodiments obtained by a person having ordinary skill in the art without making any inventive effort fall within the scope that the disclosure seeks to protect.

The disclosure provides a sulfide solid electrolyte having a molecular formula of Li_{f}P_{1-g}E_{g}S_{w}O_{g}Q_{z}, where, 5<f<10, 0<g<1, 3<w<6, 4<w+g<6, 0<z<2, E is selected from one or more of Mg, Ca, Sr, Ba, Zn, Cr, Sn, or Pb, and Q is selected from one or more of Cl, Br, or I. Herein, by introducing an E element and an O element into the halogen-rich sulfide solid electrolyte, P-O and E-S bonds are formed in a crystal structure. In this way, the air stability of the sulfide solid electrolyte is effectively improved, H₂S gas generated by atmospheric degradation is reduced, and the air stability and chemical stability of the sulfide solid electrolyte are enhanced. In addition, when this sulfide solid electrolyte is used to assemble an all-solid-state lithium-ion battery, a special dielectric layer may be formed at an electrolyte/lithium metal negative interface, and this dielectric layer contains components such as LiCl, Li₂O, and Li-Mg alloy. Herein, Li₂O has good ionic conductivity, while Li-Mg alloy promotes rapid movement of lithium ions and uniform distribution of electric field. The high interfacial energy of LiCl helps to control the nucleation and growth of lithium and prevent the formation of lithium dendrites. These properties combined together effectively promote the diffusion of lithium ions between electrodes and inhibit the growth of lithium dendrites. Therefore, the sulfide solid electrolyte provided by the disclosure may significantly improve the stability and performance of a lithium-ion battery and enhance the service life and safety of the all-solid-state lithium-ion battery.

In an embodiment of the disclosure, E is selected from Mg, for example. Doping Mg may induce electron clustering around S atoms and inhibit electron acceptance of Li, and the generated self-limiting interface hinders the redox reaction between the sulfide electrolyte and Li metal. That is, by doping Mg, the electron distribution in the sulfide solid electrolyte may be regulated, electron acceptance of Li may be inhibited, so that parasitic redox reactions between the electrolyte and metallic lithium are reduced, the cycle stability and performance of the battery are improved, and the practicality and reliability of the sulfide electrolyte are enhanced.

In an embodiment of the disclosure, Q is selected from halogen elements. According to different halogens, the degree of anion disorder between 4a and 4c sites in the crystal structure of the sulfide solid electrolyte is different, from a small amount of antisite defects when Q is I to 60% site disorder when Q is Cl. The lithium conductivity of these compounds mainly depends on the degree of disorder of anion and cation site occupation. Therefore, Q is selected from Cl, for example, to improve the ionic conductivity and electrochemical stability of the sulfide solid electrolyte and improve voltage stability. A value range of g is 0.01≤g≤0.1. When the doping amount is excessively low, an effective dielectric layer may not be formed. Excessive doping may cause excessive lattice distortion and destroy the original crystal structure. As such, structural stability of the material may be lowered, phase separation or amorphization phenomena may occur, and the ionic conductivity of the material is therefore decreased. In a specific embodiment of the disclosure, g is preferably 0.02 to improve the cycle performance of lithium-ion battery.

The disclosure further provides a method of preparing the sulfide solid electrolyte, and the following steps are at least included. According to a chemical formula of the sulfide solid electrolyte, a Li source, a P source, an E source, a S source, and a Q source are uniformly mixed according to a stoichiometric ratio and then placed in a ball mill jar for ball milling to obtain sulfide solid electrolyte precursor powder. The sulfide solid electrolyte precursor powder is calcined at a predetermined temperature to obtain the sulfide solid electrolyte.

In an embodiment of the disclosure, according to the chemical formula Li_{f}P_{1-g}E_{g}S_{w}O_{g}Q_{z} of the sulfide solid electrolyte, the Li source, P source, E source, S source, and Q source are uniformly mixed according to the stoichiometric ratio, where the Li source is selected from one or more of LiCl, LiBr, LiI, or Li₂S, etc., the P source is selected from one or more of elemental P, P₂S₅, P₄S₆, PCl₅, or PBr₅, etc., the E source is selected from one or more of oxide of E or sulfide of E, the S source is selected from one or more of elemental S, Li₂S, P₂S₅, P₄S₆, MgS, CaS, SrS, BaS, ZnS, CrS, SnS, or PbS, etc., and the Q source is selected from one or more of LiCl, PCl₅, LiBr, PBr₅, LiI, or I₂, etc. The O element in the chemical formula is derived from the oxide of E. After the raw materials are mixed uniformly, they are placed in a ball mill jar and ball milled under an inert gas atmosphere, where a ball milling time is 1h to 48h, a ball milling rotation speed is 50 rpm to 1,500 rpm, and a ball-to-material ratio is 1:1 to 100:1. The sulfide solid electrolyte precursor powder is obtained.

In an embodiment of the disclosure, the sulfide solid electrolyte precursor powder is calcined at the predetermined temperature, where the predetermined temperature is 400°C to 600°C, and the calcining time is 1h to 18h, to obtain the sulfide solid electrolyte.

The disclosure further provides an all-solid-state lithium-ion battery including a positive electrode sheet, a negative electrode sheet, and a solid electrolyte membrane disposed between the adjacent positive electrode sheet and negative electrode sheet. The positive electrode sheet includes a positive active material and a halide solid electrolyte. The positive active material is selected from, for example, one or more of lithium nickel cobalt manganese oxide (NCM), lithium nickel oxide (LNO), lithium manganese oxide (LMO), lithium nickel manganese oxide (LNMO), lithium cobalt oxide (LCO), or lithium nickel cobalt aluminum oxide (NCA), etc. The halide solid electrolyte includes Li_{2.35}Zr_{0.65}Fe_{0.35}Cl₅Br_{0.5}I_{0.5}, and the halide solid electrolyte does not undergo exothermic reaction with the de-lithiated positive active material, so that the safety of the lithium-ion battery is improved. The negative electrode sheet is, for example, one or more of a metal lithium sheet, a metal indium sheet, or a lithium-indium alloy sheet, etc. The negative electrode sheet further includes, for example, a negative active material, where the negative active material is selected from one or more of a graphite material, a silicon material, or a composite material of the graphite material and silicon material, etc. The solid electrolyte membrane includes the aforementioned sulfide solid electrolyte, so as to improve the performance of the all-solid-state lithium-ion battery.

In an embodiment of the disclosure, the positive electrode sheet further includes a conductive agent and a binder, where the conductive agent is, for example, one or a combination of at least two of conductive carbon black (super P, SP), carbon nano-tube (CNT), vapor grown carbon fiber (VGCF), or graphene, etc. The binder is, for example, polytetrafluoroethylene (PTFE) and its derivatives, etc. A mass ratio of the positive active material, halide solid electrolyte, conductive agent, and binder is, for example, (65-78):(20-30):(1-3):(1-2). In this embodiment, the mass ratio of the positive active material, halide solid electrolyte, conductive agent, and binder is, for example, 69:29:1:1. The conductive agent is a combination of the conductive carbon black (super-P) and vapor grown carbon fiber (VGCF). A mass ratio of the conductive carbon black and vapor grown carbon fiber is 1:1. The binder is, for example, polytetrafluoroethylene. After the positive active material, halide solid electrolyte, conductive agent, and binder are uniformly mixed, a mixed powder is obtained, and the positive electrode sheet is obtained by dry pressing. In an embodiment of the disclosure, when the negative electrode sheet includes a negative active material, the negative electrode sheet further includes a solid electrolyte, a conductive agent, and a binder, etc., where the solid electrolyte is, for example, a halide solid electrolyte or a sulfide electrolyte, etc., which is not limited by the disclosure. The binder is, for example, at least one of polyisoprene, polyethylene or polypropylene, etc., and the conductive agent is, for example, at least one of carbon nano-tube, carbon fiber, or acetylene black. In the disclosure, a ratio of the negative active material, conductive agent, and binder is not limited, which may be selected according to manufacturing needs. The negative electrode sheet is obtained by, for example, dry pressing.

In an embodiment of the disclosure, to obtain the performance of the sulfide solid electrolyte, for example, the sulfide solid electrolyte is cold-pressed under a predetermined pressure to obtain a solid electrolyte membrane, where the predetermined pressure is, for example, 300MPa to 400MPa, and a thickness of the solid electrolyte membrane is, for example, 100µm to 500µm.

In an embodiment of the disclosure, the negative electrode sheet is, for example, selected as a metallic lithium sheet. The positive electrode sheet, solid electrolyte membrane, and negative electrode sheet are sequentially placed, pressurized, and sealed under vacuum or inert atmosphere to obtain the all-solid-state lithium-ion battery. Herein, the assembly process of the all-solid-state lithium-ion battery is completed, for example, in a glove box under argon atmosphere.

The disclosure is to be explained more specifically through the following embodiments, which should not be understood as limiting. Within the scope consistent with the spirit of the disclosure, appropriate modifications may be made, and all of which fall within the technical scope of the disclosure.

### Example 1

Preparation of sulfide solid electrolyte: Under argon atmosphere, 2.015 mol of Li₂S, 1.5 mol of LiCl, 0.495 mol of P₂S₅, and 0.01 mol of MgO were placed into a tungsten steel ball milling jar, and tungsten steel balls were added according to a ball-to-material ratio of 40:1. After ball milling for 10 minutes at a ball milling rotation speed of 100 rpm, ball milling is performed at 500 rpm for 16h to obtain uniformly mixed sulfide solid electrolyte precursor powder. The sulfide solid electrolyte precursor powder was loaded into a crucible and sintered at a temperature of 500°C for 10h, and Li_{5.53}P_{0.99}Mg_{0.01}S_{4.49}O_{0.01}Cl_{1.5} was obtained after cooling.

Preparation of electrolyte membrane: 50 mg of Li_{5.5}P_{0.99}Sb_{0.01}S_{4.475}O_{0.025}Cl_{1.5} was cold-pressed at 360 MPa to prepare an electrolyte membrane with a thickness of 400µm and a diameter of 10mm.

Preparation of positive electrode sheet: LiNi_{0.8}Co_{0.1}Mn_{0.1}O₂, a conductive agent, Li_{2.35}Zr_{0.65}Fe_{0.35}Cl₅Br_{0.5}I_{0.5}, and PTFE were mixed according to a mass ratio of 69:1:29:1, and a positive electrode sheet was prepared by a dry method. The conductive agent was super-P and VGCF with a mass ratio of 1:1. The positive electrode sheet was cut into circular pieces with a diameter of 10 mm.

Negative electrode sheet: The negative electrode sheet was selected as a metallic lithium sheet and cut into circular pieces with a diameter of 10mm.

Assembly of all-solid-state battery: The above-prepared positive electrode sheet, electrolyte membrane, and negative electrode sheet were assembled into an all-solid-state battery.

Assembly of symmetric battery: Counter electrodes Li were placed on both sides of the electrolyte membrane and assembled with the electrolyte membrane into a Li/Li symmetric battery.

### Example 2

The chemical formula of the sulfide solid electrolyte prepared from 2.0225 mol of Li₂S, 1.5 mol of LiCl, 0.4925 mol of P₂S₅, and 0.015 mol of MgO was Li_{5.545}P_{0.985}Mg_{0.015}S_{4.485}O_{0.015}Cl_{1.5}, and other operations were consistent with that of Example 1.

### Example 3

The chemical formula of the sulfide solid electrolyte prepared from 2.03 mol of Li₂S, 1.5 mol of LiCl, 0.49 mol of P₂S₅, and 0.02 mol of MgO was Li_{5.56}P_{0.98}Mg_{0.02}S_{4.48}O_{0.02}Cl_{1.5}, and other operations were consistent with that of Example 1.

### Example 4

The chemical formula of the sulfide solid electrolyte prepared from 2.06 mol of Li₂S, 1.5 mol of LiCl, 0.48 mol of P₂S₅, and 0.04mol of MgO was Li_{5.62}P_{0.96}Mg_{0.04}S_{4.46}O_{0.04}Cl_{1.5}, and other operations were consistent with that of Example 1.

### Example 5

The chemical formula of the sulfide solid electrolyte prepared from 2.09 mol of Li₂S, 1.5 mol of LiCl, 0.47 mol of P₂S₅, and 0.06 mol of MgO was Li_{5.68}P_{0.94}Mg_{0.06}S_{4.44}O_{0.06}Cl_{1.5}, and other operations were consistent with that of Example 1.

### Example 6

The chemical formula of the sulfide solid electrolyte prepared from 2.12 mol of Li₂S, 1.5 mol of LiCl, 0.46 mol of P₂S₅, and 0.08 mol of MgO was Li_{5.74}P_{0.92}Mg_{0.08}S_{4.42}O_{0.02}Cl_{1.5}, and other operations were consistent with that of Example 1.

### Example 7

The chemical formula of the sulfide solid electrolyte prepared from 2.15 mol of Li₂S, 1.5 mol of LiCl, 0.45 mol of P₂S₅, and 0.1 mol of MgO was Li_{5.8}P_{0.9}Mg_{0.1}S_{4.48}O_{0.1}Cl_{1.5}, and other operations were consistent with that of Example 1.

### Example 8

The chemical formula of the sulfide solid electrolyte prepared from 1.83 mol of Li₂S, 1.5 mol of LiCl, 0.49 mol of P₂S₅, and 0.02 mol of MgO was Li_{5.16}P_{0.98}Mg_{0.02}S_{4.08}O_{0.02}Cl_{1.9}, and other operations were consistent with that of Example 1.

### Example 9

The chemical formula of the sulfide solid electrolyte prepared from 2.53 mol of Li₂S, 1 mol of LiCl, 0.49 mol of P₂S₅, and 0.02 mol of MgO was Li_{6.06}P_{0.98}Mg_{0.02}S_{4.98}O_{0.02}Cl, and other operations were consistent with that of Example 1.

### Example 10

The chemical formula of the sulfide solid electrolyte prepared from 3.03 mol of Li₂S, 0.5 mol of LiCl, 0.49 mol of P₂S₅, and 0.02 mol of MgO was Li_{6.56}P_{0.98}Mg_{0.02}S_{5.48}O_{0.02}Cl_{0.5}, and other operations were consistent with that of Example 1.

### Example 11

The chemical formula of the sulfide solid electrolyte prepared from 3.43 mol of Li₂S, 0.1 mol of LiCl, 0.49 mol of P₂S₅, and 0.02 mol of MgO was Li_{6.96}P_{0.98}Mg_{0.2}S_{5.88}O_{0.02}Cl_{0.1}, and other operations were consistent with that of Example 1.

### Example 12

The chemical formula of the sulfide solid electrolyte prepared from 2.03 mol of Li₂S, 1.4 mol of LiCl, 0.1 mol of LiBr, 0.49 mol of P₂S₅, and 0.02 mol of MgO was Li_{5.56}P_{0.98}Mg_{0.02}S_{4.48}O_{0.02}Cl_{1.4}Br_{0.1}, and other operations were consistent with that of Example 1.

### Example 13

The chemical formula of the sulfide solid electrolyte prepared from 2.03 mol of Li₂S, 0.1 mol of LiCl, 1.4 mol of LiBr, 0.49 mol of P₂S₅, and 0.02 mol of MgO was Li_{5.56}P_{0.98}Mg_{0.02}S_{4.48}O_{0.02}Cl_{0.1}Br_{1.4}, and other operations were consistent with that of Example 1.

### Example 14

The chemical formula of the sulfide solid electrolyte prepared from 2.03 mol of Li₂S, 1.3 mol of LiCl, 0.1 mol of LiBr, 0.1 mol of LiI, 0.49 mol of P₂S₅, and 0.02 mol of MgO was Li_{5.56}P_{0.98}Mg_{0.02}S_{4.48}O_{0.02}Cl_{1.3}Br_{0.1}I_{0.1}, and other operations were consistent with that of Example 1.

### Example 15

The chemical formula of the sulfide solid electrolyte prepared from 2.03 mol of Li₂S, 0.1 mol of LiCl, 1.3 mol of LiBr, 0.1 mol of LiI, 0.49 mol of P₂S₅, and 0.02 mol of MgO was Li_{5.56}P_{0.98}Mg_{0.02}S_{4.48}O_{0.02}Cl_{0.1}Br_{1.3}I_{0.1}, and other operations were consistent with that of Example 1.

### Example 16

The chemical formula of the sulfide solid electrolyte prepared from 2.03 mol of Li₂S, 1.5 mol of LiCl, 0.49 mol of P₂S₅, and 0.02 mol of CaO was Li_{5.56}P_{0.98}Ca_{0.02}S_{4.48}O_{0.02}Cl_{1.5}, and other operations were consistent with that of Example 1.

### Example 17

The chemical formula of the sulfide solid electrolyte prepared from 2.03 mol of Li₂S, 1.5 mol of LiCl, 0.49 mol of P₂S₅, and 0.02 mol of ZnO was Li_{5.56}P_{0.98}Zn_{0.02}S_{4.48}O_{0.02}Cl_{1.5}, and other operations were consistent with that of Example 1.

### Comparative Example 1

The chemical formula of the sulfide solid electrolyte prepared from 2 mol of Li₂S, 1.5 mol of LiCl, and 0.5 mol of P₂S₅ was Li_{5.5}PS_{4.5}Cl_{1.5}, and other operations were consistent with that of Example 1.

### Comparative Example 2

The chemical formula of the sulfide solid electrolyte prepared from 2 mol of Li₂S, 1.4 mol of LiCl, 0.1 mol of LiBr, and 0.5mol of P₂S₅ was Li_{5.5}PS_{4.5}Cl_{1.4}Br_{0.1}, and other operations were consistent with that of Example 1.

### Comparative Example 3

The chemical formula of the sulfide solid electrolyte prepared from 2 mol of Li₂S, 1.3 mol of LiCl, 0.1 mol of LiBr, 0.1 mol of LiI, and 0.5 mol of P₂S₅ was Li_{5.5}PS_{4.5}Cl_{1.3}Br_{0.1}I_{0.1}, and other operations were consistent with that of Example 1.

In the disclosure, different sulfide solid electrolytes are adopted in Examples 1 to 17 and Comparative Examples 1 to 3, and the ionic conductivity of the sulfide solid electrolytes is tested. After the sulfide solid electrolytes are exposed in a dry room at -40°C for 24h, the ionic conductivity test is performed again. In this embodiment, the ionic conductivity is obtained by, for example, an AC impedance method, and the test results are shown in Table 1.

In the disclosure, different sulfide solid electrolytes are adopted in Examples 1 to 17 and Comparative Examples 1 to 3 obtain the lithium-ion batteries. Under 25°C environment, long cycle charge-discharge is performed on the above-prepared lithium-ion batteries, the discharge capacity is measured, and the energy density is calculated and obtained. The working voltage range of the battery test is 2.5V to 4.3V, the charge-discharge rate is 1C/1C, and the discharge capacity of the first cycle is recorded as 1C discharge capacity. The test is ended when the battery capacity reaches 80% (80% state of health, 80% SOH) of the first cycle capacity, and the room temperature cycle number is obtained. The symmetric battery is subjected to a constant current charge-discharge cycle test under a current density of 1mA/cm², and the test results are shown in Table 2.

**Table 1: Ionic conductivity of sulfide solid electrolytes in Examples 1 to 17 and Comparative Examples 1 to 3**

| Group | Solid electrolyte chemical formula | Electrolyte ionic conductivity (S/cm) | Ionic conductivity (S/cm) after exposure to - 40° dry room for 24h | Retention rate of ionic conductivity after exposure to - 40° dry room for 24h |
|---|---|---|---|---|
| Example 1 | Li_{5.53}P_{0.99}Mg_{0.01}S_{4.49}O_{0.01}Cl_{1.5} | 8.88×10⁻³ | 4.29×10⁻³ | 48.38% |
| Example 2 | Li_{5.545}P_{0.985}Mg_{0.015}S_{4.485}O_{0.015}Cl_{1.5} | 8.45×10⁻³ | 4.31×10⁻³ | 50.95% |
| Example 3 | Li_{5.56}P_{0.08}Mg_{0.02}S_{4.48}O_{0.02}Cl_{1.5} | 8.16×10⁻³ | 5.92×10⁻³ | 72.55% |
| Example 4 | Li_{5.62}P_{0.96}Mg_{0.04}S_{4.46}O_{0.04}Cl_{1.5} | 6.75×10⁻³ | 4.91×10⁻³ | 72.74% |
| Example 5 | Li_{5.68}P_{0.94}Mg_{0.06}S_{4.44}O_{0.06}Cl_{1.5} | 5.83×10⁻³ | 4.25×10⁻³ | 72.90% |
| Example 6 | Li_{5.74}P_{0.92}Mg_{0.08}S_{4.42}O_{0.02}Cl_{1.5} | 4.9×10⁻³ | 3.58×10⁻³ | 73.06% |
| Example 7 | Li_{5.8}P_{0.9}Mg_{0.1}S_{4.48}O_{0.1}Cl_{1.5} | 3.56×10⁻³ | 2.61×10⁻³ | 73.31% |
| Example 8 | Li_{5.16}P_{0.98}Mg_{0.02}S_{4.08}O_{0.02}Cl_{1.9} | 1.03×10⁻³ | 7.01×10⁻⁴ | 68.06% |
| Example 9 | Li_{6.06}P_{0.98}Mg_{0.02}S_{4.98}O_{0.02}Cl | 1.84×10⁻³ | 1.21×10⁻³ | 65.76% |
| Example 10 | Li_{6.56}P_{0.98}Mg_{0.02}S_{5.48}O_{0.02}Cl_{0.5} | 7.85×10⁻⁴ | 5.25×10⁻⁴ | 66.88% |
| Example 11 | Li_{6.96}P_{0.98}Mg_{0.02}S_{5.88}O_{0.02}Cl_{0.1} | 8.96×10⁻⁵ | 6.16×10⁻⁵ | 68.75% |
| Example 12 | Li_{5.56}P_{0.98}Mg_{0.02}S_{4.48}O_{0.02}Cl_{1.4}Br_{0.1} | 7.25×10⁻³ | 4.91×10⁻³ | 67.72% |
| Example 13 | Li_{5.56}P_{0.98}Mg_{0.02}S_{4.48}O_{0.02}Cl_{0.1}Br_{1.4} | 4.4×10⁻³ | 2.62×10⁻³ | 59.55% |
| Example 14 | Li_{5.56}P_{0.98}Mg_{0.02}S_{4.48}O_{0.02}Cl_{1.3}Br_{0.1}I _{0.1} | 6.68×10⁻³ | 4.39×10⁻³ | 65.72% |
| Example 15 | Li_{5.56}P_{0.98}Mg_{0.02}S_{4.48}O_{0.02}Cl_{0.1}Br_{1.3}I _{0.1} | 3.06×10⁻³ | 1.64×10⁻³ | 53.79% |
| Example 16 | Li_{5.56}P_{0.98}Ca_{0.02}S_{4.48}O_{0.02}Cl_{1.5} | 5.56×10⁻³ | 2.97×10⁻³ | 53.52% |
| Example 17 | Li_{5.56}P_{0.98}Zn_{0.02}S_{4.48}O_{0.02}Cl_{1.5} | 6.13×10⁻³ | 3.75×10⁻³ | 61.23% |
| Comparative Example 1 | Li_{5.5}PS_{4.5}Cl_{1.5} | 9.34×10⁻³ | 1.05×10⁻³ | 11.24% |
| Comparative Example 2 | Li_{5.5}PS_{4.5}Cl_{1.4}Br_{0.1} | 8.23×10⁻³ | 1.11×10⁻³ | 13.54% |
| Comparative Example 3 | Li_{5.5}PS_{4.5}Cl_{1.3}Br_{0.1}I_{0.1} | 7.29×10⁻³ | 1.18×10⁻³ | 16.19% |

**Table 2. Test results of lithium-ion batteries and symmetric batteries in Examples 1 to 17 and Comparative Examples 1 to 3**

| Group | Room temperature 1C/1C cycle count (80% SOH) | Li/Li symmetric battery cycle time (h) at 1mA/cm² |
|---|---|---|
| Example 1 | 121 (short circuit) | 297 |
| Example 2 | 230 (short circuit) | *515* |
| Example 3 | 536 | 1127 |
| Example 4 | 493 | 1041 |
| Example 5 | 440 | 935 |
| Example 6 | 368 | 791 |
| Example 7 | 353 | 761 |
| Example 8 | 200 | 455 |
| Example 9 | 209 | 473 |
| Example 10 | 186 | 427 |
| Example 11 | 173 | 401 |
| Example 12 | 474 | 1003 |
| Example 13 | 454 | 963 |
| Example 14 | 436 | 927 |
| Example 15 | 301 | 657 |
| Example 16 | 353 | 756 |
| Example 17 | 461 | 972 |
| Comparative Example 1 | 2 (short circuit) | 59 |
| Comparative Example 2 | 4 (short circuit) | 63 |
| Comparative Example 3 | 5 (short circuit) | 65 |

Referring to Table 1 and Table 2, by comparing Examples 1 to 17 to Comparative Examples 1 to 3, it may be known that when the E element and the O element are not added to the electrolyte, the lithium-ion battery has almost no cycle performance and short circuit occurs quickly, indicating that when the E element and the O element are lacking, the chemical stability of the sulfide solid electrolyte material is poor, the mechanical strength is insufficient, and it is difficult to ensure the long-term cycle performance of the lithium-ion battery. By introducing the E element and the O element, the cycle performance of the lithium-ion battery may be improved.

Referring to Table 1 and Table 2, by comparing Examples 1 to 7, it may be known that when the E element in the sulfide solid electrolyte is selected as Mg, as the doping amount of Mg increases, the cycle performance of the lithium-ion battery gradually increases and then gradually decreases. Further, as the doping amount of the E element increases, the ionic conductivity of the sulfide solid electrolyte decreases, but the ionic conductivity retention rate after exposure to -40°C dry room for 24h increases. The air stability and chemical stability of the sulfide solid electrolyte are thus enhanced, and the stability and performance of the battery are improved. Therefore, by controlling the doping amount of E in the sulfide solid electrolyte, the cycle service life and safety of the all-solid-state lithium-ion battery may be improved. Further, the ionic conductivity and the ionic conductivity retention rate are kept at a high level, the rate performance of the lithium-ion battery is ensured, and the charge-discharge efficiency and the cycle service life are increased. High ionic conductivity may reduce the internal resistance of the battery and improve the power density and energy density of the battery.

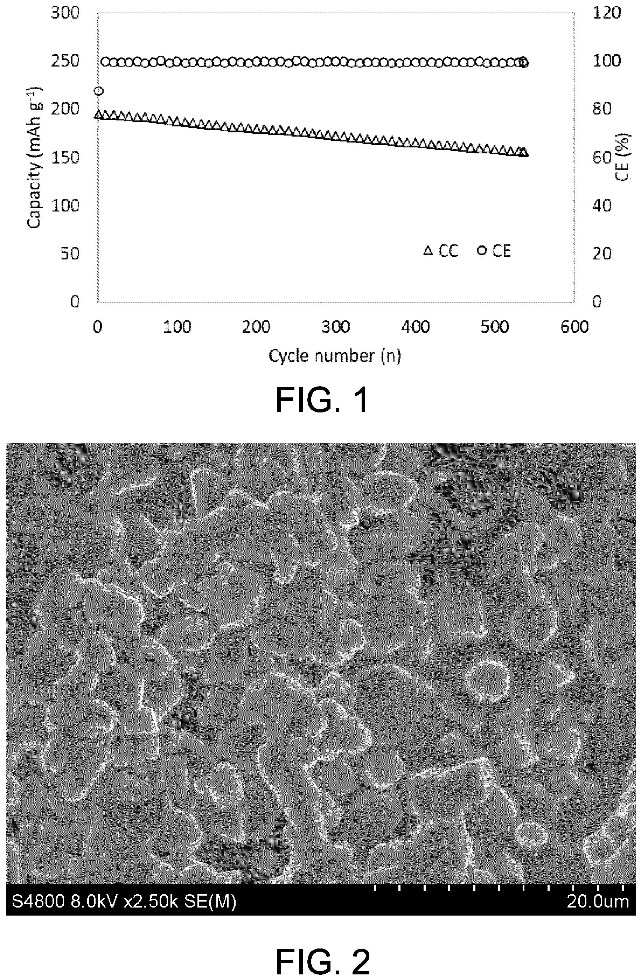

Referring to FIG. 1, in the room temperature cycle process of the all-solid-state lithium-ion battery in Example 3, the current density adopted for constant current charge-discharge is 1C. As can be seen from FIG. 1, under the current density of 1C, the all-solid-state lithium-ion battery in Example 3 still has an energy storage capacity of approximately 150mAh/g after 500 cycles, indicating that the sulfide solid electrolyte has favorable reaction kinetics and cycle stability. The obtained solid electrolyte membrane has a favorable enhancement effect on the cycle stability and reaction activity specific capacity of the battery. The all-solid-state lithium-ion battery combines favorable specific capacity, rate performance, and cycle service life.

Referring to FIG. 2, the sulfide solid electrolyte obtained in Example 3 is subjected to morphology characterization to obtain a scanning electron microscope (SEM) image. As can be seen from FIG. 2, the sulfide solid electrolyte has a regular shape, clear boundaries, compact structure, and fewer pores, which may be beneficial to maintaining the ionic conductivity of the sulfide solid electrolyte, so that the retention rate of ionic conductivity is kept.

Referring to Table 1 and Table 2, comparing Example 3 to Examples 8 to 11, it can be known that when the doping amount of Mg element in the sulfide solid electrolyte is the same, increasing and decreasing the Cl element content both cause considerable decline in ionic conductivity and lower the cycle performance of the lithium-ion battery. Therefore, controlling the content of Cl element may ensure the ionic conductivity of the sulfide solid electrolyte and the performance of the lithium-ion battery.

Referring to Table 1 and Table 2, comparing Example 3 to Examples 12 to 15, it may be known that when the doping amount of Mg element in the sulfide solid electrolyte is the same, incorporating one or more of Br or I elements reduces the cycle performance of the battery. Therefore, selecting Cl element for Q may improve the ionic conductivity and electrochemical stability of the sulfide solid electrolyte and improve voltage stability. Comparing Example 3 to Examples 16 to 17, it may be known that when other elements are selected for the E doping element, the ionic conductivity retention rate may also be increased, the stability of the sulfide solid electrolyte may be enhanced, and the cycle performance of the lithium-ion battery may be improved, but it is weaker than Mg doping. Therefore, when doping with Mg, the performance of the lithium-ion battery is optimal.

The disclosure further provides an electronic apparatus including at least one of the above lithium-ion battery, and the lithium-ion battery is used to provide electrical energy. Herein, the electrical apparatus may be a vehicle, a mobile phone, a portable device, a notebook computer, a ship, a spacecraft, an electric toy, an electric tool, etc. In an embodiment of the disclosure, the vehicle may be, for example, a new energy vehicle, and the new energy vehicle may be a pure electric vehicle, a hybrid vehicle, or a range-extended vehicle, etc. The spacecraft includes an airplane, a rocket, a space shuttle, a spaceship, etc. The electric toy includes a stationary or mobile electric toy, for example, a game machine, an electric car toy, an electric boat toy, an electric airplane toy, etc. The electric tool includes a metal cutting electric tool, a grinding electric tool, an assembling electric tool, and an electric tool for railway use, including, for example, an electric drill, an electric grinder, an electric wrench, an electric screwdriver, an electric hammer, an impact drill, a concrete vibrator, an electric planer, etc. The electrical apparatus includes the above lithium-ion battery, and the electrical apparatus therefore includes the advantages of the above lithium-ion battery. Description thereof is not repeated herein.

In view of the foregoing, the disclosure provides a sulfide solid electrolyte, the method of preparing the same, and the application. By introducing the E element, the O element, and the Q element into the sulfide solid electrolyte, the air stability of the sulfide solid electrolyte is effectively improved, the H₂S gas generated by atmospheric degradation is reduced, and the air stability and chemical stability of the sulfide solid electrolyte are enhanced. A special dielectric layer may be formed at the electrolyte/lithium metal negative interface, so that the ionic conductivity of the sulfide solid electrolyte is ensured, lithium ions may move rapidly, and the electric field is uniformly distributed. The nucleation and growth of lithium are controlled, and lithium dendrites are prevented from being formed, so the stability and performance of the lithium-ion battery may be significantly improved, and the service life and safety of the all-solid-state lithium-ion battery and lithium battery are enhanced. The stability of conductivity of the sulfide solid electrolyte is increased, the air stability is enhanced, and the electrolyte/active material interface properties are improved, so that compatibility with active materials is raised.

## Claims

1. A sulfide solid electrolyte, having a molecular formula of Li_{f}P_{1-g}E_{g}S_{w}O_{g}Q_{z}; wherein, 5<f<10, 0<g<1, 3<w<6, 4<w+g<6, 0<z<2, E is selected from one or more of Mg, Ca, Sr, Ba, Zn, Cr, Sn, or Pb, and Q is selected from one or more of Cl, Br, or I.

2. The sulfide solid electrolyte according to claim 1, wherein E is selected from Mg, and Q is selected from Cl.

3. The sulfide solid electrolyte according to claim 1, wherein a value range of g is 0.01≤g≤0.1.

4. A method of preparing the sulfide solid electrolyte according to any one of claims 1 to 3, comprising:
according to a chemical formula of the sulfide solid electrolyte, mixing a Li source, a P source, an E source, a S source, and a Q source according to a stoichiometric ratio, placing the mixture in a ball mill jar for ball milling to obtain sulfide solid electrolyte precursor powder; and
calcining the sulfide solid electrolyte precursor powder at a predetermined temperature to obtain the sulfide solid electrolyte.

5. The method of preparing the sulfide solid electrolyte according to claim 4, wherein the Li source is selected from one or more of LiCl, LiBr, LiI, or Li₂S, the P source is selected from one or more of elemental P, P₂S₅, P₄S₆, PCl₅, or PBr₅, the E source is selected from one or more of oxide of E or sulfide of E, the S source is selected from one or more of elemental S, Li₂S, P₂S₅, P₄S₆, MgS, CaS, SrS, BaS, ZnS, CrS, SnS, or PbS, the Q source is selected from one or more of LiCl, PCl₅, LiBr, PBr₅, LiI, or I₂, and the O element in the chemical formula is derived from the oxide of E.

6. The method of preparing the sulfide solid electrolyte according to claim 4, wherein ball milling time is 1h to 48h, a ball milling rotation speed is 50 rpm to 1,500 rpm, and a ball-to-material ratio is 1:1 to 100:1.

7. The method of preparing the sulfide solid electrolyte according to claim 4, wherein the predetermined temperature is 400°C to 600°C, and time of the calcining treatment is 1h to 18h.

8. An all-solid-state lithium-ion battery, at least comprising:
a positive electrode sheet comprising a halide solid electrolyte comprising Li_{2.35}Zr_{0.65}Fe_{0.35}Cl₅Br_{0.5}I_{0.5};
a negative electrode sheet; and
a solid electrolyte membrane disposed between the adjacent positive electrode sheet and negative electrode sheet, wherein the solid electrolyte membrane comprises the sulfide solid electrolyte according to any one of claims 1 to 3.

9. The all-solid-state lithium-ion battery according to claim 8, wherein the positive electrode sheet comprises a positive active material selected from one or more of lithium nickel cobalt manganese oxide, lithium nickel oxide, lithium manganese oxide, lithium nickel manganese oxide, lithium cobalt oxide, or lithium nickel cobalt aluminum oxide.

10. An electronic apparatus, comprising the all-solid-state lithium-ion battery according to any one of claims 8 to 9.
